Europäisches Patentamt

European Patent Office

Office européen des brevets

(11) Veröffentlichungsnummer: **0 186 170**
**B1**

(12) **EUROPÄISCHE PATENTSCHRIFT**

(45) Veröffentlichungstag der Patentschrift: **11.04.90**

(21) Anmeldenummer: **85116423.6**

(22) Anmeldetag: **21.12.85**

(51) Int. Cl.⁵: **C 10 B 55/00, C 10 B 53/08, C 10 L 9/08**

(54) **Verfahren zur kontinuierlichen Verkokung von Steinkohlenhartpech.**

(30) Priorität: **24.12.84 DE 3447418**

(43) Veröffentlichungstag der Anmeldung:
**02.07.86 Patentblatt 86/27**

(45) Bekanntmachung des Hinweises auf die Patenterteilung:
**11.04.90 Patentblatt 90/15**

(84) Benannte Vertragsstaaten:
**BE FR GB IT**

(56) Entgegenhaltungen:
**DE-A-2 818 456**
**DE-A-2 913 666**
**US-A-4 388 152**

**ULLMANNS ENCYKLOPÄDIE DER TECHNISCHEN CHEMIE, 4. neubearbeitete und erweiterte Auflage, Band 14, 1977, Seiten 516,517,562,563, Verlag Chemie, Weinheim, DE;**

(73) Patentinhaber: **RÜTGERSWERKE AKTIENGESELLSCHAFT**
**Mainzer Landstrasse 217**
**D-6000 Frankfurt am Main 1 (DE)**

(73) Patentinhaber: **Still Otto GmbH**
**Christstrasse 9 Postfach 10 18 50**
**D-4630 Bochum 1 (DE)**

(72) Erfinder: **Lorenz, Kurt, Dr.**
**Habichtstrasse 65**
**D-4320 Hattingen (DE)**
Erfinder: **Dungs, Horst**
**Am Düngelbruch 21**
**D-4690 Herne (DE)**
Erfinder: **Alscher, Arnold, Dr.**
**Zeissbogen 39**
**D-4300 Essen 1 (DE)**
Erfinder: **Kramer, Eckart**
**Am Botanischen Garten 23**
**D-4100 Duisburg 1 (DE)**

(74) Vertreter: **Dahlkamp, Heinrich-Leo, Dipl.-Ing.**
**c/o Still Otto GmbH Patentabteilung**
**Christstrasse 9 Postfach 10 18 50**
**D-4630 Bochum 1 (DE)**

**Beschreibung**

Die Erfindung bezieht sich auf ein Verfahren zur kontinuierlichen Verkokung von Steinkohlenhartpech zur Herstellung von kalziniertem Formkoks, bestehend aus den im Oberbegriff des Hauptanspruches angegebenen Verfahrensstufen.

Ein Hartpech aus Steinkohle oder Braunkohle wird üblicherweise zur Herstellung von Elektrodenkoks benutzt. Aus dem bei einer Temperatur von ca. 300°C in flüssiger und pumpfähiger Form vorliegenden Hartpech kann nach verschiedenen bekannten Verfahren ein Koks erzeugt werden. Zu diesen Verfahren gehört das sogenannte Delayed-Coking-Verfahren, bei dem Koks unter Druck bei Temperaturen von ca. 500°C hergestellt wird. Weiterhin zählt zu den bekannten Verfahren die Pechverkokung in Horizontalkammerverkokungsöfen, bei dem aus Hartpech drucklos Pechkoks hergestellt wird. Das Fluid-Coking-Verfahren liefert schießlich einen stark aufgeblähten Koks, der praktisch nur als Brennstoff eingesetzt wird.

Bei dem gattungsgemäßen Verfahren soll aus Steinkohlenhartpech ein kalzinierter Formkoks erzeugt werden. Dabei wird das mit ca. 300°C anfallende flüssige Hartpech zunächst aufgeheizt und bei einer Temperatur von bis zu 600°C geschwelt, der Schwelkoks unter Zugabe von heißem Binder-Hartpech brikettiert, die Briketts bei Temperaturen bis ca. 1.400°C kalziniert und anschließend gekühlt.

Nach dem Lurgi-Ruhrgas (LR)-Verfahren wird z.B. feinkörnige Kohle geschwelt, wobei als Wärmeträger im Kreislauf geführter Schwelkoks dient, der durch teilweise Verbrennung aufgeheizt wurde (vgl. Ullmann, Band 14, 1977, Seite 516/517). Aus dem anfallenden Schwelkoks kann z.B. nach dem BFL-Heißbrikettierverfahren Formkoks hergestellt werden (vgl. Ullmann, a.a.O., Seite 562/563). Diese Verfahren beschränken sich aber auf den Einsatz von Kohle und enthalten keine Hinweise über nachgeschaltete Kalzinierstufen.

Zur Kalzinierung der Briketts ist es darüber hinaus bekannt, die Briketts in einem Drehrohrofen im Gegenstrom direkt mit heißen Gasen zu beaufschlagen. Dabei werden die Briketts laufend umfewälzt und unterliegen einem hohen Abrieb. Durch die ausschließlich direkte Beheizung unter Zugabe von Luft ist auch der Abbrand erheblich. Die bei der Kalzinierung entstehenden Schwachgase werden einer Nachverbrennung unterzogen und nach üblicher Entstaubung und Entschwefelung über einen Kamin ins Freie geleitet. Diese Aufarbeitung und Abgasreinigung ist aufwendig. Eine andere Nutzung des bei dieser direkten Beheizung anfallenden Gases ist wegen des sehr geringen Heizwertes nicht möglich.

Aufgabe der Erfindung ist es nun, ein Verfahren der eingangs definierten Art vorzuschlagen, bei dem eine derartig aufwendige Abgasreinigung entfallen kann, ein weiterverwendbares Gas mit höherem Heizwert gewonnen und der Abrieb und Abbrand bei den Briketts verringert wird.

Zur Lösung dieser Aufgabe wird vorgeschlagen, daß die Kalzinierung in einem indirekt beheizten Vertikalkammerschachtofen erfolgt.

Bei dieser ausschließlich indirekten Beheizung des Vertikalkammerschachtofens kann bei der Kalzinierung ein sehr hochwertiges Starkgas abgezogen werden, das als Heizgas dienen kann. Ohne jegliche Nachverbrennung und Aufarbeitung der Abgase kann der Vertikalkammerschachtofen betrieben werden. Die Verbrennungsabgase der indirekten Beheizung werden entweder in üblicher Weise direkt zum Kamin geleitet oder sie dienen im rekuperativen oder regenerativen Wärmeaustausch zur Vorwärmung der Verbrennungsmedien.

Der besondere Vorteil der erfindungsgemäßen Verwendung des Vertikalkammerschachtofens anstelle eines Drehrohrofens zur Kalzinierung des Hartpeches liegt darin, daß überraschenderweise die Briketts in dem Schachtofen auch ohne die im Drehrohrofen vorgenommene Umwälzung verkokt werden können und es dabei nicht zu störendem Abrieb und Abbrand der Briketts kommt. Die zusätzliche Energie zur dauernden Umwälzung der Briketts im Drehrohrofen kann beim erfindungsgemäßen Einsatz des Schachtofens eingespart werden.

Die bei der Schwelung und Kalzinierung anfallenden Rohgase können günstigerweise in einem gemeinsamen Waschkühler gekühlt und gereinigt werden und anschließend zur Unterfeuerung dienen.

Erfindungsgemäß kann beispielsweise ein Schachtofen verwendet werden, wie er in der DE—C 28 18 456 oder der DE—A 33 44 106.5 beschrieben ist. Aus der letztgenannten Schrift ist insbesondere ein Vertikalkammerofen mit einer sich unmittelbar an die Beheizungsstufe anschließenden Kokstrockenkühlstufe ersichtlich, wobei der Vertikalkammerofen allerdings für einen diskontinuierlichen Betrieb bestimmt ist. Erfindungsgemäß kann ein derartiger Vertikalkammerofen mit unmittelbar anschließender Kokstrockenkühlstufe auch zur kontinuierlichen Verkokung von Steinkohlenharztpech mit direkter und/oder indirekter Übertragung der Warme in der Kokstrockenkühlstufe verwendet werden.

Eine besonders günstige Art der Ausnutzung der in der Kokstrockenkühlung übertragenen Wärme liegt dann vor, wenn zur Beheizung in der Schwelstufe ausschließlich in der Kokstrokkenkühlstufe indirekt auf 800 bis 1.000°C vorgeheizte Luft dient. Es hat sich gezeigt, daß mit der vorgewärmten Luft auch ohne Zugabe von Brenngas die Schwelstufe ausreichend indirekt beheizt werden kann. Falls das einmal nicht der Fall ist, kann auf einfach Weise zusätzlich z.B. ein Flüssiggas zugegeben werden.

Erfindungs gemäßkann neben der üblichen Verwendung eines Regenerators oder Rekuperators zur Vorwärmung der Verbrennungsluft für die Beheizung des Vertikalkammerschachtofens die Verbrennungsluft auch in der Kokstrockenkühlstufe vorgewärmt werden.

Die Aufheizung des Hartpeches in der Schwelstufe kann erfindungsgemäß auch dadurch vereinfacht und verbessert werden, daß ein Teil der heißen Briketts, vorzugsweise vor Eintritt in die Kühlstufe, aus dem Vertikalkammerschachtofen abgezogen wird und zur Erhitzung des Hartpeches in der Schwelstufe dient. Dabei läßt sich in einfacher Weise das mit einer Temperatur von ca. 300°C in flüssiger Form vorliegende Hartpech auf die kontinuierlich bewegten Formkoksstücke spritzen. Die Menge der rückgeführten heiben Briketts kann so gewählt werden, daß deren fühlbare Wärme zur Schwelung des Hartpeches ausreicht und auf eine zusätzliche Beheizung verzichtet werden kann. Nach Verlassen der Schwelung wird das Gemisch dann zweckmäßigerweise zerkleinert und dann in die Brikettierstufe gegeben.

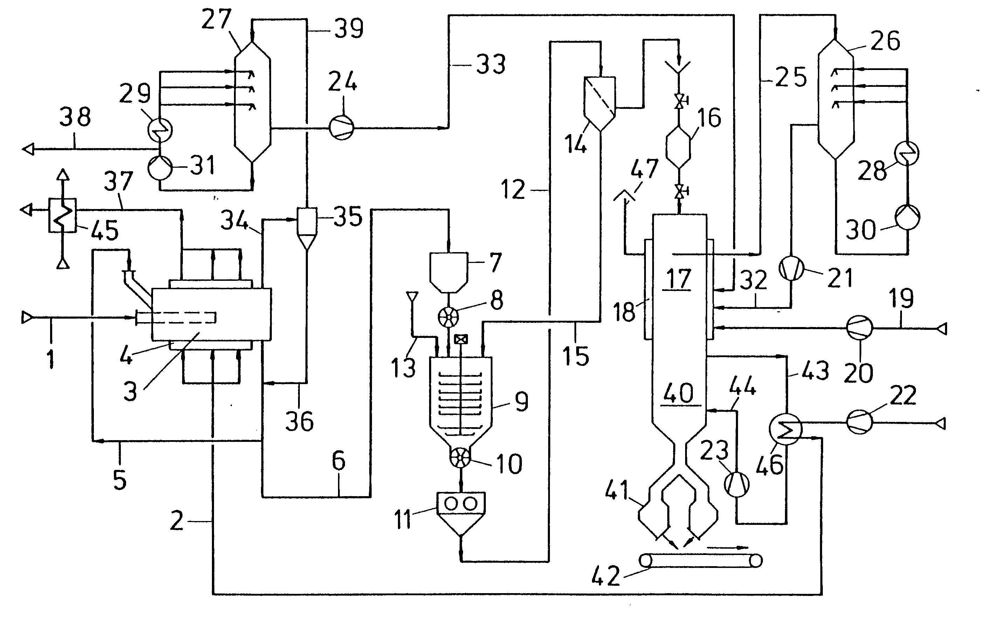

Die Erfindung wird anhand der beigefügten Figur beispielsweise näher erläutert.

Das 300°C heiße Hartpech wird mit Hilfe einer Dosierpumpe über die Leitung 1 in an sich bekannter Weise etwa in der Mitte der Drehtrommel 3 eingespritzt. Die Drehtrommel 3 wird ausschließlich indirekt beheizt, wobei zur Beheizung im Wärmetauscher 46 der Kokstrockenkühlstufe 40 auf ca. 900°C vorgewärmte Luft über die Leitung 2 in den Beheizungsraum 4 gegeben wird. Diesen Beheizungsraum 4 verläßt die Luft mit einer Temperatur von ca. 600°C und sie wird über die Leitung 37 dem Dampferzeuger 45 zugeführt, aus dem sie ins Freie gelangt. Das Schwelgas wird über die Leitung 34 aus der Drehtrommel 3 abgezogen und nach Entstaubung im Zyklon 35 über die Leitung 39 dem Waschkühler 27 zugeführt. Die Waschflüssigkeit wird mit Hilfe der Pumpe 31 im Kreislauf geführt und über den Kühler 29 gekühlt. Aus dem Waschkühlerkreislauf wird über die Leitung 38 ein Schwelteer abgezogen, während das gekühlte und gereinigte Gas mit Hilfe des Gebläses 24 über die Leitung 33 zur indirekten Beheizung des Vertikalkammer-Schachtofens 17 geleitet wird.

Der Schwelkoks verläßt die Drehtrommel mit einer Temperatur von ca. 600°C und wird gemeinsam mit dem über die Leitung 36 vom Zyklon her kommenden Feinstaub über den Schwelkoksförderer 6 in einen Bunker 7 gegeben. Zur Verbesserung des Wärmeaustausches und der Entgasung in der Schwelstufe kann ein Teil des Schwelkokses über die Leitung 5 zur Aufgabeseite der Drehtrommel zurückgeführt werden. Aus dem Bunker 7 wird der Schwelkoks über die Aufgabeschleuse 8 in an sich bekannter Weise in den Mischer 9 gegeben und dort mit ebenfalls ca. 300°C heißem Hartpech als Bilder vermischt. Über den Zuteiler 10 gelangt das Gemisch in die Walzenpresse 11. Die heißen Briketts werden über den Brikettförderer 12 auf ein Sieb 14 gegeben und gelangen anschließend über die Eintragschleuse 16 oben in den Vertikalkammer-Schachtofen 17.

Die in dem Sieb 14 abgesiebten Feinanteile werden über die Leitung 15 in den Mischer 9 zurückgegeben. Während ihrer kontinuierlichen Bewegung durch den Vertikalkammer-Schachtofen 17 werden die Briketts auf eine Temperatur von ca. 1 300°C aufgeheizt und kalziniert. Unterhalb der Kalzinierstufe schließt sich im Schachtofen direkt die Kokstrockenkühlstufe 40 an, in der die Briketts durch im Kreislauf geführtes Kühlgas auf eine Temperatur von ca. 150 bis 200°C geküllt werden, bevor sie über die Austragsschleuse 41 auf den Koksförderer 42 gelangen. Das Kühlgas wird im Wärmeaustauscher 46 gekühlt und wird mit Hilfe des Gebläses 23 umgewälzt. Das kalte Kühlgas wird unten in die Kühlstufe gegeben, es strömt im Gegenstrom durch die Koksschüttung und wird über die Leitung 43 wieder abgezogen. Im Wärmetauscher 46 kann entweder über das Gebläse 22 zugeführte Luft erhitzt werden, es kann aber auch in einfacher Weise hochgespannter Dampf erzeugt werden.

Der indirekten Beheizung 18 des Vertikalkammer-Schachtofens 17 wird sowohl Verbrennungsluft über die Leitungen 19 und das Gebläse 20 als auch ein Unterfeuerungsgas, das im Waschkühlerkreislauf 26, 28, 30 gereinigt worden ist, mit Hilfe des Gebläses 21 und über die Leitung 32 zugeführt. Das Verbrennungsabgas gelangt über die Leitung 47 zum Kamin, während das Rohgas über die Leitung 25 zum Kopf des Waschkühlers 26 geführt wird.

*Bezugzeichenliste*
(1) Hartpechaufgabe
(2) Luft
(3) Drehtrommel
(4) Beheizungsraum
(5) Rückführungsleitung für Schwelkoks
(6) Schwelkoksförderer
(7) Bunker
(8) Aufgabeschleuse
(9) Mischer
(10) Zuteiler
(11) Walzenpresse
(12) Brikettförderer
(13) Hartpech als Binder
(14) Sieb
(15) Rückführung
(16) Eintragsschleuse
(17) Vertikalkammerschachtofen
(18) indirekte Beheizung
(19) Luftzufuhr
(20) Gebläse
(21) Gebläse
(22) Gebläse
(23) Gebläse
(24) Gebläse
(25) Rohgas
(26) Waschkühler
(27) Waschkühler
(28) Kühler
(29) Kühler
(30) Pumpe
(31) Pumpe
(32) Unterfeuerungsgas
(33) Unterfeuerungsgas
(34) Schwelgas
(35) Zyklon

(36) Schwelkoks  .
(37) Abluft
(38) Schwelteer
(39) Schwelgas
(40) Kühlstufe
(41) Austragsschleuse
(42) Koksförderer
(43) heißes Kühlgas
(44) kaltes Kühlgas
(45) Dampferzeugung
(46) Wärmetauscher
(47) Verbrennungsabgas

**Patentansprüche**

1. Verfahren zur kontinuerlichen Verkokung von Steinkohlenhartpech zur Herstellung von kalziniertem Formkoks, bestehend aus folgenden Verfahrensstufen:
— Schwelung des mit ca. 300°C eingesetzten Hartpeches zur Erzeugung eines Schwelkokses mit einer Temperatur von weniger als 600°C,
— Brikettierung des Schwelkoks unter Zugabe von heißem Binder-Hartpech,
— Kalzinierung der Briketts bei Temperatur bis ca. 1.400°C und
— anschließender Kühlung der Briketts,
dadurch gekennzeichnet, daß die Kalzinierung in einem indirekt beheizten Vertikalkammerschachtofen erfolgt und ein Starkgas erzeugt wird, das nach einer Reinigung und Kühlung für die indirekte Beheizung in der Schwelstufe und/oder Kalzinierstufe oder für andere Zwecke dient.

2. Verfahren nach Anspruch 1, dadurch gekennzeichnet, daß an die indirekte Beheizung in Vertikalkammerschachtofen sich eine Kokstrockenkühlstufe mit direkter und/oder indirekter Übertragung der Wärme anschließt.

3. Verfahren nach Anspruch 1, dadurch gekennzeichnet, daß die bei der Schwelung und Kalzinierung anfallenden Rohgase in einem gemeinsamen Waschkühler gekühlt und gereinigt werden.

4. Verfahren nach Anspruch 2, dadurch gekennzeichnet, daß zur Beheizung in der Schwelstufe ausschließlich in der Kokstrockenkühlstufe indirekt auf 800 bis 1.000°C vorgeheizte Luft dient.

5. Verfahren nach Anspruch 4, dadurch gekennzeichnet, daß zusätzlich ein Heizgas in der indirekten Beheizungsstufe verbrannt wird.

6. Verfahren nach Anspruch 4, dadurch gekennzeichnet, daß die Luft bzw. das Rauchgas mit einer Temperatur von 500 bis 700°C die Schwelstufe verläßt und anschließend zur Dampferzeugung dient.

7. Verfahren nach Anspruch 1, dadurch gekennzeichnet, daß die Verbrennungsluft für die Beheizung des Vertikalkammerschachtofens in der Kokstrockenkühlstufe vorgewärmt wird.

8. Verfahren nach den Ansprüchen 1 oder 2, dadurch gekennzeichnet, daß ein Teil der heißen Briketts, vorzugsweise vor Eintritt in die Kühlstufe, aus dem Vertikalkammerschachtofen abgezogen wird und zur Erhitzung des Hartpeches in einer Schwelstufe dient.

9. Verfahren nach Anspruch 8, dadurch gekennzeichnet, daß das Gemisch aus rückgeführten Briketts und Schwelkoks nach der Schwelung zerkleinert und dann zur Brikettierstufe gegeben wird.

**Revendications**

1. Procédé pour la cokéfaction continue de brai dur de houille pour la production de coke moulé calciné se composant des phases de procédé suivantes:
— la distillation lente du brai dur enfourné à une température d'environ 300°C pour la production d'un semi-coke à une température inférieure à 600°C,
— le briquetage du semi-coke additionné de brai dur liant chaud,
— la calcination des briquettes à des températures atteignant jusqu'à 1.400°C et
— enfin le refroidissement des briquettes,
caractérisé par le fait que la calcination a lieu dans un four à chambres vertical chauffé indirektement et qu'il est produit un gaz riche qui, après avoir été nettoyé et refroidi, est utilisé pour le chauffage indirect dans la cellule de distillation et/ou dans la cellule de calcination ou bien encore à d'autres fins.

2. Procédé selon la revendication 1, caractérisé par le fait qu'une cellule de refroidissement à sec du coke avec transmission directe et/ou indirecte de chaleur est contiguë au chauffage indirect dans le four à chambres vertical.

3. Procédé selon la revendication 1, caractérisé par le fait que les gaz bruts se produisant lors de la distillation lente et de la calcination sont refroidis et nettoyés dans un refroidisseur par lavage commun.

4. Procédé selon la revendication 2, caractérisé par le fait qu'il est uniquement utilisé pour le chauffage dans la cellule de distillation lente de l'air préchauffé indirectement dans la cellule de refroidissement à sec du coke à une température d'environ 800 à 1.000°C.

5. Procédé selon la revendication 4, caractérisé par le fait qu'un gaz de combustion est brûlé en plus dans la cellule de chauffage indirecte.

6. Procédé selon la revendication 4, caractérisé par le fait que l'air ou selon le cas le gaz de la combustion quitte la cellule de distillation lente à une température de 500 à 700°C et est utilisé ensuite pour la production de vapeur.

7. Procédé selon la revendication 1, caractérisé par le fait que l'air de combustion pour le chauffage du four à chambres vertical est préchauffé dans la cellule de refroidissement à sec du coke.

8. Procédé selon la revendication 1 ou 2, caractérisé par le fait qu'une partie des briquettes chaudes est retirée du four à chambres vertical, de préférence avant l'entrée dans la cellule de refroidissement, et est utilisée pour la mise à chaud du brai dur dans la cellule de distillation lente.

9. Procédé selon la revendication 8, caractérisé par le fait que le mélange se composant de briquettes recyclées,et de semi-coke est concassé après la distillation lente et mis ensuite dans la celule de briquetage.

## Claims

1. A process for continuously coking hard coal pitch to produce a calcinated formed coke comprised of the following process stages:
— low-temperature carbonization of the approx. 300°C hot hart pitch being employed to produce a low-temperature coke with a temperature of less than 600°C,
— briquetting of low-temperature coke with admixture of hot binder hard pitch,
— calcination of briquettes at temperatures of up to approx. 1,400°C, and
— subsequent cooling of briquettes, characterized in that the calcination is carried out in an indirectly fired vertical chamber slot-type oven and that a rich gas is generated which after cleaning and cooling serves for indirect heating at the low-temperature carbonization stage and/or calcinating stage or for other purposes.

2. A process pursuant to Claim 1, characterized in that the indirect firing in the vertical chamber slot-type oven is succeeded by a dry coke cooling stage with a direct and/or indirect transfer of heat.

3. A process pursuant to Claim 1, characterized in that the crude gases evolving during low-temperature carbonization and calcination are cooled and cleaned in a common scrubbing cooler.

4. A process pursuant to Claim 2, characterized in that air preheated indirectly in the dry cooling stage to 800 to 1,000°C solely serves for heating in the low-temperature carbonization stage.

5. A process pursuant to Claim 4, characterized in that a fuel gas is additionally burnt in the indirect heating stage.

6. A process pursuant to Claim 4, characterized in that the air and/or flue gas leaves the low-temperature carbonization stage with a temperature of 500 to 700°C and subsequently serve for steam generation.

7. A process pursuant to Claim 1, characterized in that the combustion air for firing of the vertical chamber slot-type oven is preheated in the dry coke cooling stage.

8. A process pursuant to Claim 1 or Claim 2, characterized in that part of the hot briquettes, preferably prior to their entry into the cooling stage, is withdrawn from the vertical chamber slot-type oven and serves for heating-up of the hard pitch in a low-temperature carbonization stage.

9. A process pursuant to Claim 8, characterized in that the mixture of recycled briquettes and low-temperature coke is crushed after low-temperature carbonization and then passed on to the briquetting stage.